# EUROPÄISCHE PATENTSCHRIFT

(11) **EP 3 130 417 B1**
(45) Veröffentlichungstag und Bekanntmachung des Hinweises auf die Patenterteilung: **19.02.2020**
(21) Anmeldenummer: 16183978.2
(22) Anmeldetag: 12.08.2016
(51) Int. Cl.: B23B 27/00, B23B 27/04, B23B 27/16, B23B 29/04

(54) **DREHWERKZEUG**
ROTARY TOOL
OUTIL ROTATIF

(30) Priorität: 12.08.2015 DE 102015113312
(43) Veröffentlichungstag der Anmeldung: 15.02.2017
(73) Patentinhaber: Gühring Kg, 72458 Albstadt (DE)
(72) Erfinder: GEIGER, Roland, 72108 Rottenburg / Weiler (DE)
(74) Vertreter: Spachmann, Holger

(56) Entgegenhaltungen:
- EP-A1- 0 638 385
- EP-A2- 1 829 636
- WO-A1-2012/003876
- DE-A1- 3 321 184
- US-A- 4 188 162

## Beschreibung

Die Erfindung betrifft ein Drehwerkzeug für eine spanende Bearbeitung von Werkstücken, insbesondere ein Ausdreh- oder Einstichwerkzeug zur Bearbeitung von Bohrungen mit einem Durchmesser d ≤ 15 mm.

### STAND DER TECHNIK

Aus dem Stand der Technik ist eine Vielzahl von Drehwerkzeugen bekannt, die einen Grundkörper und einem Werkzeugkopf mit mindestens einer Spankante aufweisen.

Der Einspannabschnitt kann ein Einspannschaft oder ein besonders geformter axialer Endbereich des Drehwerkzeugs sein, der für die Aufnahme in eine spezielle Einspannvorrichtung, wie einer HSK-Spannvorrichtung, einer Hydrodehn-Spannvorrichtung oder einem Schnellspannfutter, Drehfutter oder Zahnkranzfutter ausgebildet ist. Derartige Drehwerkzeuge können Bohr-, Reib-, Fräs- oder Polierwerkzeuge sein. In der Regel weisen derartige Drehwerkzeuge im Werkzeugkopf zumindest eine Spankante auf, durch die in einem spanabhebenden Arbeitsgang Material von einem Werkstück entfernt wird.

Drehwerkzeuge mit austauschbarem Schneidkopf erlauben beim Verschleiß der Spankanten den Austausch eines Schneidkopfs, ohne dass das komplette Drehwerkzeugs ausgewechselt werden muss, wodurch Kosten und Material eingespart werden kann. Hierbei haben Anordnung und Gestalt der Befestigungselemente, welche den Schneidkopf verdrehsicher am Werkzeugschaft fixieren, so wie Geometrie des Schneidkopfes unmittelbare Auswirkungen auf die Leistungsfähigkeit und Reparatureignung des kompletten Drehwerkzeugs.

Die DE 10 2006 055 277 A1 offenbart einen Schneidkopf für ein derartiges Drehwerkzeug. Der Schneidkopf wird an der Stirnseite des vorderen Endes des Werkzeugschafts durch ein Befestigungselement angebracht. Das Befestigungselement befindet sich auf der axialen Endfläche des Werkzeugschafts und wirkt in Richtung der Rotationsachse des Werkzeugs zur Fixierung des Schneidkopfes, dient allerdings nicht als Verdrehsicherung. Zur Sicherung gegen Verdrehen sind mehrere Nuten an der Kontaktfläche zwischen abnehmbarem Schneidkopf und Werkzeugschaft angebracht. Hierbei entstehen eine hohe Kerbwirkung und eine hohe Rotationskraft auf diese Nutflächen.

Aus der DE 10 2010 046 132 A1 ist ein Fräswerkzeug bekannt, das eine abnehmbare Trägerplatte und eine abnehmbaren Schneide aufweist. Die Trägerplatte wird über ein mit einem Gewinde versehenes Befestigungsmittel an den Werkzeugschaft montiert, wodurch die Schneide verklemmt und zentriert wird. Bei der Montage erfolgt eine Ausrichtung der Trägerplatte mittels zur Rotationsachse ausgerichteten Kontaktflächen zwischen Trägerplatte und Werkzeugkopf, sowie eine Fixierung der Trägerplatte und der Schneide durch das Befestigungsmittel. Die querliegende Kontaktfläche, die eine Nut aufweisen kann, liegt am zum Einspannabschnitt des Werkzeugs weisenden Ende der Trägerplatte. Das Befestigungsmittel ist demnach zwischen axialer Vorderkante des Werkzeugs mit der Spankante und der querliegenden Kontaktfläche angeordnet. Bei Rotation des Werkzeugs erfährt die Spankante ein hohes Drehmoment nicht nur in tangentialer Richtung, sondern auch in radialer Richtung zur Drehachse und bewirkt eine Drehmomentbelastung der Trägerplatte mit einer Drehachse um das Befestigungsmittel. Die querliegende Kontaktfläche wirkt gegen dieses Drehmoment und verhindert eine Drehbewegung der Trägerplatte um das Befestigungsmittel. Die Trägerplatte ist somit hohen entgegengesetzt wirkenden Kräften ausgesetzt, da die beiden Lastangriffspunkte Spankante und Kontaktfläche, an den Stellen des größten Hebelarms der Trägerplatte bzgl. der Achse des Befestigungsmittels liegen. Die Bearbeitungskräfte werden lediglich über das Befestigungsmittel zwischen Trägerplatte und Werkzeugschaft übertragen, die Kontaktflächen dienen lediglich als Verdrehsicherung zur Lagefixierung der Trägerplatte auf dem Werkzeugkopf.

Hierdurch erfährt der Schneidkopf über die komplette Länge eine große Momentenbelastung und wird nicht nur im Bereich der Spankante einer großen Beanspruchung ausgesetzt. Eine exakte Ausrichtung der Schneidkante am Werkzeugkopf kann nicht gewährleistet werden, insbesondere wenn ein Spiel der Trägerplatte um das Befestigungsmittel besteht.

Im Bereich der Bearbeitung von Aluminium und Weichmetallwerkstoffen, die einen höheren Siliziumgehalt aufweisen, kommt es zu einem hohen Verschleiß eines Drehwerkzeugs aufgrund der Zähigkeit des zu bearbeitenden Werkstücks. Hierdurch werden insbesondere Flächen im Werkzeugkopf eines Drehwerkzeugs mechanisch wie thermisch strapaziert, wodurch diese nach längerer Benutzung des Drehwerkzeugs ausdünnen und verschleißen. Hierdurch besteht die Gefahr, dass die mechanische Stabilität des Drehwerkzeugs, die Schmierfähigkeit und die Lebensdauer eingeschränkt werden.

Die EP 0 638 385 A1 offenbart ein Drehwerkzeug mit einem ablösbaren Schneidkopf. Der Schneidkopf wird über eine Schraube, die radial angeordnet ist, am Werkzeugkopf befestigt und der hintere Teil des Schneidkopfs wird teilweise formkomplementär umschlossen in einem Einspannabschnitt aufgenommen. Der Schneidkopf weist an der dem Einspannabschnitt zuweisenden Seite einen V-förmigen Fortsatz auf, der in den Werkzeugkopf eingreift, wobei der Werkzeugkopf eine passende formkomplementäre Aussparung aufweist. Der Schneidkopf ist über zur Rotationsachse des Werkzeugs im Wesentlichen querliegende, formkomplementären Kontaktflächen des Werkzeugkopfs und des Schneidkopfs in Form von Ausrichtungsflächen zwischen Schneidkopf und Werkzeugkopf in Längs- und Querrichtung zur Rotationsachse ausrichtend fixierbar. Weiterhin überragt der Schneidkopf den Werkzeugkopf in Richtung kopfseitigem Ende des Drehwerkzeugs, wobei der Werkzeugkopf am axialen vorderen Ende eine ebene Fläche aufweist. Diese ebene Fläche dient allerdings nicht als Ausrichtungsfläche, da diese planar ausgebildet ist und den Schneidkopf nicht in radialer Richtung in einer bestimmten Position festsetzen kann. Die radiale Festsetzung erfolgt mittels der Kontaktflächen, der Befestigungsschraube und der formkomplementären rückwärtigen Aussparung des Werkzeugkopfs, wobei die Befestigungsschraube ein Drehpunkt darstellt, an dem sich der Schneidkopf in der Aussparung drehen kann.

In der DE 20 2005 012 862 U1 ist ein Zerspannungswerkzeug mit einem um seine Längsachse drehbaren Werkzeughalter dargestellt, an dessen Stirnseite ein Schneideinsatz mittels einer axial ausgerichteten Spannschraube festigt ist. Die Spannschraube durchgreift eine zentrale Bohrung des Schneideinsatzes und ist in einem Innengewinde einer Hülse eingeschraubt. Die Hülse ist durch eine stiftförmige Verlängerung mit einer Ausnehmung im Werkzeughalter befestigt, in die ein Sicherungselement eingreift. Die Festlegung des Schneideinsatzes am Werkzeughalter erfolgt lediglich durch die axial wirkende Befestigungsschraube, wobei auftretende Kräfte auf den Schneideinsatz über die Schraube auf den Werkzeughalter übertragen werden.

Die DE 34 48 086 C2, DE 10 2006 055 277 A1 und die EP 2 536 522 B1 betreffen gattungsgemäße Einstichwerkzeuge mit jeweils einer Befestigungsschraube, die axial ein Schneideinsatz durchgreift und in ein axiales Innengewinde eines Werkzeughalters geschraubt wird. Durch radial ausgerichtete Verzahnungsrippen und Vertiefungen am Schneideinsatz bzw. an der axialen Stirnseite des Werkzeughalters erfolgt eine drehgesicherte Festlegung des Schneideinsatzes am Werkzeughalter. Auch in dieser Ausführung dient die Befestigungsschraube zur Kraftübertragung zwischen Schneideinsatz und Werkzeughalter.

Die in der US 4 188 162 A, DE 33 21 184 A1 und WO 2012/003876 A1 offenbarten weitere Werkzeuge mit einem Werkzeughalter und einem wechselbaren Schneideinsatz. Der Schneideinsatz wird über zumindest eine Schraube fixiert, wobei der Schneideinsatz eine sich verjüngende Bohrung aufweist, durch welche die Schraube hindurchgreift und durch Verschrauben mit dem Werkzeughalter den Schneideinsatz in einer gewünschten Position fixiert. Dabei wird der Schneideinsatz über die Schraube positioniert und ggf. durch eine axial rückversetzte formkomplementäre Teilumfassung des Scheideinsatzes aufgenommen.

Die EP 1 829 636 A2 offenbart einen Schneidplattenhalter, wobei mit mehreren Schrauben, die unterschiedlich bezüglich der Werkzeugachse orientiert sind, die Schneidplatte an einem Werkzeughalter fixiert wird.

Aufgabe der Erfindung ist es, ein Drehwerkzeug vorzuschlagen, bei welchem durch eine verbesserte Lagerung des Schneidkopfes am Werkzeugschaft die Beanspruchung des Schneidkopfes und der Befestigungsschraube während der Rotation des Drehwerkzeugs reduziert und somit eine längere Lebensdauer des Schneidkopfes bei geringem Materialverbrauch ermöglicht wird.

Diese Aufgabe wird durch ein Drehwerkzeug nach dem unabhängigen Anspruch gelöst. Vorteilhafte Weiterentwicklungen der Erfindung sind Gegenstand der Unteransprüche.

### OFFENBARUNG DER ERFINDUNG

Gegenstand der Erfindung ist ein Drehwerkzeug gemäß dem Anspruch 1 für eine spanende Bearbeitung von Werkstücken, insbesondere ein Ausdreh- oder Einstichwerkzeug zur Bearbeitung von Bohrungen mit einem Durchmesser d ≤ 15 mm. Das Drehwerkzeug umfasst einen Einspannabschnitt und einen Werkzeugkopf, der einen Werkzeugschaft und einen ablösbaren Schneidkopf mit mindestens einer Spankante aufweist.

Es wird vorgeschlagen, dass der Schneidkopf durch einen einstückigen, am Werkzeugschaft angeordneten und radial ausgerichteten Zapfen und / oder ein radial ausgerichtetes, lösbares Befestigungsmittel am Werkzeugschaft befestigbar, bevorzugt einsteckbar ist, und der Schneidkopf über zur Rotationsachse des Werkzeugs im Wesentlichen querliegende gekrümmte, abgewinkelte oder gebogene, und formkomplementären Kontaktflächen in Form von Ausrichtungsflächen zwischen Schneidkopf und Werkzeugschaft in Längs- und Querrichtung zur Rotationsachse ausreichend fixierbar ist, sodass der Schneidkopf auf der Rotationsachse in radialer Achse zentriert wird. Die Kontaktfläche ist am axialen Ende des Werkzeugschafts definiert und der Zapfen und/oder das Befestigungsmittel sind in Richtung Einspannabschnitt rückversetzt, so dass eine Befestigung des Schneidkopfs am Zapfen und/oder durch das Befestigungsmittel ein axiales Verpressen der Kontaktflächen bewirkt.

Die im Wesentlichen querliegenden Kontaktflächen dienen zur längs- und queraxialen Ausrichtung des Schneidkopfes bzgl. der Rotationsachse des Drehwerkzeugs und können eine Nutform aufweisen. Die im Wesentlichen querliegenden Kontaktflächen können in jede beliebige radiale Richtung eine Krümmung aufweisen, im Speziellen in eine oder zwei Achsen gekrümmt und formkomplementär zueinander ausgeformt sein. Die querliegenden Kontaktflächen stellen eine Lage- bzw. Positionssicherung gegen eine Querverschiebung des Schneidkopfes bzgl. der Rotationsachse dar, da der Schneidkopf vom Werkzeugschaft an mindestens einer Seitenfläche umgriffen wird oder andersrum. Durch die im Wesentlichen querliegenden Kontaktflächen wird der Schneidkopf auf der Rotationsachse in radialer Achse zentriert. Der Zapfen und / oder das lösbare Befestigungsmittel dienen zur axialen Fixierung des Schneidkopfes am Werkzeugschaft und verhindert somit eine axiale Bewegung des Schneidkopfes. Die Schneidplatte kann eine Ausnehmung ausweisen, in der der radial ausgerichtete Zapfen eintaucht oder in der das Befestigungsmittel durchgreift. Der Zapfen kann auf eine Kontaktfläche des Werkzeugkopfs angeordnet sein, die eine in radialer Richtung weisende Normale aufweist, bzw. das Befestigungsmittel, beispielsweise eine Schraube, kann in einer Ausnehmung, insbesondere ein Gewinde dieser Fläche befestigt sein. Der Zapfen bzw. das Befestigungsmittel dienen einerseits dazu, die Schneidplatte radial auf der Fläche des Werkzeugkopfs zu befestigen, andererseits dazu, eine axial wirkende Verpresskraft auf die Schneidplatte auszuüben, die die Kontaktfläche der Schneidplatte an die kopfseitige Kontaktfläche des Werkzeugs verpresst. Dabei sind die Kontaktflächen bevorzugt formkomplementär und gekrümmt, abgewinkelt oder gebogen ausgeformt, so dass durch die Verpresskraft und den Formsitz der Kontaktflächen eine axiale und radiale Festsetzung der Schneidplatte an dem Werkzeugkopf erreicht wird. Mit Hilfe der im Wesentlichen querliegenden Kontaktfläche kann der Schneidkopf und somit die Spankante optimal ausgerichtet werden. Auftretende Drehmomentkräfte werden über die Kontaktflächen zwischen Schneidkopf und Werkzeugschaft abgeleitet, wobei der Zapfen oder das Befestigungsmittel von den bei der Spanbearbeitung auftretenden Kräften gering belastet wird. Im Gegensatz zum Stand der Technik dient das Befestigungsmittel bzw. der Zapfen nicht zur radialen Festsetzung und nimmt nur in geringem Maße Bearbeitungskräfte auf, die von der Schneidplatte zum Werkzeugkopf abgeleitet werden. Der Zapfen bzw. das Befestigungsmittel übt vornehmlich eine Verpresskraft zwischen die axial dem Zapfen bzw. Befestigungsmittel endseitig vorgelagerten Kontaktflächen auf, wobei die Kontaktflächen ausgeformt sind, sowohl radiale als auch axiale Kräfte aufzunehmen. Die Kontaktflächen wirken hierzu im Formschluss zusammen, der eine radiale Fixierung bewirkt. Die Kontaktflächen können in eine radiale Richtung, bevorzugt in zwei orthogonale radiale Richtung formkomplementär und radial fixierend ausgeformt sein. Die Verbindung von Schneidplatte und Zapfen und/oder das Befestigungsmittel können zum Aufbringen von axialen Spannkräften ausgeformt sein und beispielsweise in Axialrichtung in einem Winkel kleiner 90° ausgerichtet sein.

Bei einer derartigen Gestaltung eines Drehwerkzeugs sind nur wenige Bauteile, genauer nur zwei Bauteile notwendig, um einen austauschbaren Schneidkopf bereitzustellen. Diese sind der Werkzeugschaft und der Schneidkopf. Der Zapfen ist einstückig am Werkzeugschaft als ein Bauteil ausgebildet, das im Wesentlichen radial ausgerichtet ist. Die Fixierung kann beispielsweise durch thermisches Einschrumpfen des Schneidkopfes auf dem Werkzeugschaft erfolgen, indem der Schneidkopf erhitzt auf den Zapfen gesteckt und anschließend abgekühlt wird. Der Zapfen muss nicht über die komplette Länge den gleichen Durchmesser aufweisen, sondern kann sich in Richtung Werkzeugschaft hin verjüngen. Der Zapfen kann geringfügig in Richtung Werkzeugkopf abgewinkelt sein, um eine verbesserte Spannwirkung, insbesondere bei Befestigung mittels einer Schraubverbindung mit der Spannplatte auszuüben

Die Befestigung des Schneidkopfs am Zapfen kann durch ein radial ausgerichtetes, lösbares Befestigungsmittel wie eine Schraube oder einen Gewindebolzen, erfolgen und der Schneidkopf kann hierdurch gegen einer radialen Bewegung bei Rotation des Drehwerkzeugs gesichert wird. Alternativ kann eine Fixierung durch ein Befestigungsmittel alleine ohne Zapfen erfolgen. Das Befestigungsmittel kann geringfügig in einem Bereich von 1°-30° in Richtung Werkzeugkopf abgewinkelt ausgerichtet sein, um eine erhöhte Spannkraft auf die Schneidplatte in Richtung Aufnahmeschaft des Werkzeugs bereitzustellen.

Bei Montage des Schneidkopfes am Werkzeugschaft erfolgt eine für die rotatorische Bewegung des Drehwerkzeugs optimale Verspannung zwischen Schneidkopf und Werkzeugschaft. Durch die Reihenfolge, in welcher die Kontaktflächen und der Zapfen bzw. das lösbare Befestigungsmittel montiert werden, bzw. in Kontakt treten, wird der Schneidkopf zentrisch auf der Rotationsachse angeordnet und an den Werkzeugschaft gepresst. Das Schneidkopf wird derart verspresst, dass die Beanspruchungen des Zapfens bzw. des Befestigungsmittels bei einer Spanbearbeitung des Drehwerkzeugs so gering wie möglich sind. Dies wird dadurch ermöglicht, dass die im Wesentlichen querliegende Kontaktfläche des Werkzeugschafts am axialen Ende des Werkzeugschafts angeordnet ist, und somit am Ort der geringsten Entfernung von der Spankante des Schneidkopfes. Die an der Spankante auftretenden Rotationskräfte werden direkt über die im Wesentlichen querliegenden Kontaktflächen aufgenommen und nicht zunächst durch den kompletten Schneidkopf geleitet und über den Zapfen bzw. das Befestigungsmittel in den Werkzeugschaft eingeleitet. Es ist besonders vorteilhaft, wenn eine Kontaktflächen nutenförmig ausgebildet ist, wobei die andere Kontaktfläche formkomplementär hierin eingreift, so dass die Kontaktflächen flächig ineinander eingreifen, bzw. über die komplette Kontaktfläche formkomplementär in Kontakt stehen.

Dadurch, dass der Schneidkopf mit einer gekrümmt verlaufenden Kontaktfläche am axialen Ende des Werkzeugschafts aufsitzt, und eine radiale Befestigung des Schneidkopfs mit dem Werkzeugschaft axial in Richtung Einspannschaft hinter der Kontaktflächenverbindung sitzt, die bevorzugt eine axiale Verpressung des Schneidkopfs gegenüber dem Werkzeugschaft bewirkt, werden Drehmomentkräfte der Spankante unmittelbar über die kontaktschlüssig umgreifenden Kontaktflächen räumlich benachbart zur Spankante auf den Werkzeugkopf übertragen, so dass die Befestigungsverbindung mechanisch gering belastet wird. Hierdurch wird ein formkomplementärer Sitz und exakte Ausrichtung des Schneidwerkzeugs ermöglicht und somit die Bearbeitungsqualität verbessert.

In einer bevorzugten Ausführungsform kann der Schneidkopf einen Fixierbereich im axialen Längsabschnitt des Werkzeugschafts und einen die mindestens eine Spankante tragenden Frontbereich aufweisen. Der Frontbereich des Schneidkopfes steht in Längsrichtung über dem axialen Ende des Werkzeugschafts über. Der Schneidkopf weist somit zwei Bereiche auf, wobei die im Wesentlichen querliegende Kontaktfläche des Schneidkopfes räumlich zwischen diesen beiden Teilbereichen, Fixierbereich und Frontbereich, angeordnet ist. Der Fixierbereich befindet sich auf Höhe des Werkzeugschafts, der Frontbereich ragt über diesen Werkzeugschaft hinaus. Die im Wesentlichen querliegende Kontaktfläche liegt somit am axialen Ende des Werkzeugschafts und steht mit der Kontaktfläche des Werkzeugschafts in flächigem Kontakt. Der Fixierbereich befindet sich in axialer Richtung hin zum Einspannabschnitt des Drehwerkzeugs hinter diesen Kontaktflächen. Ein Lastabtrag durch eine Rotationsbewegung des Drehwerkzeugs erfolgt zunächst über die Kontaktflächen und nur in geringem Maße über den Fixierbereich durch den Zapfen und / oder das Befestigungsmittel. Im Übergangsbereich zwischen Fixier- und Frontbereich des Schneidkopfs kann zumindest eine Spanführungsfläche ausgebildet sein, die einen Spanabtrag zwischen Front- und Fixierbereich ermöglicht.

In einer bevorzugten Ausführungsform kann die im Wesentlichen querliegende Kontaktfläche des Werkzeugschafts konkav ausgebildet sein und der Frontbereich eine hierzu korrespondierende konvexe Kontaktfläche aufweisen. Die Kontaktfläche des Werkzeugschafts weist zumindest teilweise eine axial in Richtung Einspannabschnitt rückspringende Vertiefung, insbesondere eine Nut auf, welche die Form einer V-Nut, teilweisen V-Nut, elliptischen Nut und / oder treppenartig abgestuften Nut, teilweise treppenartig abgestuften Nut und/oder teilelliptischen Nut aufweist. Die korrespondierende Kontaktfläche des Schneidkopfes ist als inverse Form der Kontaktfläche des Werkzeugschafts ausgebildet. Vorteilhafterweise weist die Nut die tiefste Stelle auf der Rotationsachse auf, so dass eine optimale Zentrierung des Schneidkopfes auf dem Werkzeugschaft erfolgen kann. Dadurch, dass der Schneidkopf die Negativform der Nut des Werkzeugschafts aufweist, kann der Schneidkopf optimal auf der Rotationsachse zentriert werden. Die Kontaktflächen können lediglich im zentralen Bereich eine derartige konkave bzw. konvexe Form aufweisen, oder über die komplette Kontaktfläche derart ausgebildet sein. Alternativ ist auch eine Ausführung denkbar, bei der die Kontaktfläche des Werkzeugschafts konvex ausgebildet ist, und die Kontaktfläche des Schneidkopfs hierzu formkomplementär konkav ausgebildet ist.

In einer bevorzugten Ausführungsform kann die Nut einen Öffnungswinkel 90° ≤ α ≤ 160°, bevorzugt 100° ≤ α ≤ 140°, ganz besonders bevorzugt zwischen 105° ≤ α ≤ 125° aufweisen. Ein Winkel 105° ≤ α ≤ 125° ist im Speziellen bei einer teilweisen oder kompletten V-Nut zum Abtrag der Querkräfte vorteilhaft, da die im Wesentlichen querliegende Kontaktfläche eine genügende Neigung aufweist. Eine besonders vorteilhafte Abtragung der Querkräfte hat sich bei einem Winkel α = 120° für eine komplette V-Nut gezeigt. Ebenso kann die Nut nur in Teilbereichen diesen Winkel α oder mehrere unterschiedliche Winkel aufweisen.

In einer bevorzugten Ausführungsform kann das Befestigungsmittel in eine Durchgangsbohrung am Schneidkopf in radialer Richtung zur Rotationsachse des Drehwerkzeugs eingreifen, bevorzugt formschlüssig in diese Durchgangsbohrung eingreifen. Dies ermöglicht die formschlüssige Verbindung zwischen Schneidkopf und Werkzeugschaft. Eine Bewegung des Schneidkopfes in radialer und axialer Richtung wird somit während der Rotation des Drehwerkzeugs unterbunden.

In einer bevorzugten Ausführungsform kann der Zapfen am Werkzeugschaft eine Ausnehmung, insbesondere eine Durchgangsbohrung aufweisen. Die Ausnehmung kann zur Aufnahme des Befestigungsmittels dienen. Die Ausnehmung kann den komplette Zapfen und den Werkzeugschaft betreffen oder nur in Teilen des Zapfens ausgebildet sein. Die Ausnehmung ist bevorzugt zentrisch im Zapfen angebracht und kann sich über die Länge verjüngen, was z.B. bei einer thermischen Verspannung mit dem Schneidkopf vorteilhaft sein kann.

In einer bevorzugten Ausführungsform kann die Ausnehmung ein Innengewinde aufweisen und das Befestigungsmittel in Form einer Schraube oder eines Gewindebolzen darin eingreifen, wobei der Schneidkopf mit dem Werkzeugschaft formschlüssig verbunden werden kann. Das Innengewinde befindet sich im Zapfen und somit im Material des Werkzeugschafts. Der Schneidkopf weist lediglich eine Durchgangsbohrung ohne Gewinde auf. Im Betrieb erfährt der Schneidkopf den größten Verschleiß, so dass der Schneidkopf aus einem besonders harten Werkstoff hergestellt wird. Hierbei kann es schwierig sein, in einen derartig harten Werkstoff ein Gewinde einzubringen. Zudem würde der Querschnitt des Schneidkopfes durch das Gewinde zusätzlich geschwächt. An den scharfen Kanten des Gewindes entstehen außerdem Spannungsspitzen, welche im Schneidkopf zu vermeiden sind. Das Innengewinde befindet sich im Werkzeugschaft, der aus einem weniger harten Material, d. h. einem weniger verschleißfesten Material, als der Schneidkopf ausgebildet sein kann. Das Gewinde kann hier problemlos eingebracht werden und beeinträchtigt während der Rotation des Drehwerkzeugs den Kraftfluss nicht nachteilig.

In einer bevorzugten Ausführungsform kann der Mittelpunkt S1 der Durchgangsbohrung des Schneidkopfes und der Mittelpunkt S2 des Zapfens des Werkzeugschafts beim flächigen Kontakt der Kontaktflächen längsaxial versetzt angeordnet sein. Wird der Schneidkopf in den Zapfen eingefädelt bzw. auf diesen aufgesteckt, erfolgt zunächst die Zentrierung des Schneidkopfes auf der Rotationsachse durch die im Wesentlichen querliegenden Kontaktflächen, welche jeweils eine Nut aufweisen können. Die im Wesentlichen querliegenden Kontaktflächen stehen bei diesem Montageschritt in Kontakt. Der Spalt zwischen den Kontaktflächen Δp1 wird nahezu geschlossen, wobei noch kein Pressdruck p zwischen den beiden Kontaktflächen entsteht. Auf der dem Werkzeugkopf abgewandten endseitigen Kontaktfläche des Fixierbereichs des Schneidkopfes verbleibt ein Spalt Δp2 zum Werkzeugschaft, mit Δp2 > Δp1. Erst durch Montage eines lösbaren Befestigungsmittels in die Bohrung bzw. in das Innengewinde des Zapfens wird der Schneidkopf in Richtung Einspannabschnitt des Werkzeugs verpresst, da der Mittelpunkt S2 der Schneidkopf-Durchgangsbohrung in Richtung Mittelpunkt S1 der Durchgangsbohrung getrieben wird. Hierbei werden die im Wesentlichen querliegenden Kontaktflächen aufeinandergepresst, der Spalt Δp1 komplett geschlossen, und der Schneidkopf mit dem Werkzeugschaft verklemmt. An den im Wesentlichen querliegenden Kontaktflächen mit Nut entsteht ein Pressdruck p im Schneidkopf sowie im Werkzeugschaft. Der Spalt Δp2 wird durch die Anbringung des lösbaren Befestigungsmittels ebenso verringert bzw. geschlossen, wobei jedoch keine Druckspannung bzw. geringere Druckspannungen als die an den Kontaktflächen entstehen. Es kann an der endseitigen Kontaktfläche auch ein Endspalt Δp2 verbleiben. Nach der vollständigen Montage des Schneidkopfes am Werkzeugschaft können die Mittelpunkte S1 und S2 genau aufeinander liegen, wobei der vorgenannten Pressdruck p zwischen Spannkopf und Werkzeugschaft in Längsachsenrichtung durch eine radiale Kraft, die vom Zapfen bzw. Befestigungsmittels aufgebracht wird, bestimmt wird. Zumindest aber hat sich der Abstand Δa zwischen den Mittelpunkten S1 und S2 nach der vollständigen Montage verkleinert.

In einer bevorzugten Ausführungsform steht das Befestigungsmittel nicht über den Schneidrand der Spankante des Schneidkopfes über. Bei Rotation des Drehwerkzeugs findet somit keine Störung durch das Befestigungsmittel statt. Bei Ausführung des Befestigungsmittels als Schraube kann der Schraubenkopf vollkommen im Fixierbereich des Schneidkopfes versenkt werden. Bei einer Ausführung als Gewindebolzen kann zur Fixierung eine Mutter eingesetzte werden, welche ebenso vollständig im Fixierbereich des Schneidkopfes versenkt werden kann. Zur besseren Montage kann der Fixierbereich im Bereich der Ausnehmung für den Schraubenkopf ebenso eine Senke bzw. eine Vertiefung aufweisen.

In einer bevorzugten Ausführungsform kann ein Frontbereich des Schneidkopfes einen im Wesentlichen teilkreisförmigen, insbesondere halbkreisförmigen Querschnitt aufweisen und durch die Kontaktfläche begrenzt sein, wobei die mindestens eine Spankante radial über den Querschnitt im Frontbereich und / oder in Längsrichtung über den Schneidkopf übersteht. Durch die Teilkreisform in diesem Bereich des Schneidkopfes kann eine optimale Abführung der Späne in dem Bereich erfolgen, der keinen Querschnitt des Frontbereiches bildet, aber auf gleicher Ebene existiert. Die Spankante steht über den Querschnitt des Frontbereichs über. Hierdurch wird ein großer Spanfreiraum geschaffen, so dass ein großes Spanvolumen abgetragen werden kann sowie einer Überwärmung des Werkzeugs entgegengewirkt wird.

In einer bevorzugten Ausführungsform kann ein Fixierbereich des Schneidkopfes, in welchem der Schneidkopf an den Werkzeugschaft montiert wird, einen im Wesentlichen teilkreisförmigen, insbesondere halbkreisförmigen Querschnitt aufweisen, wobei der Fixierbereich zu einem Frontbereich des Schneidkopfes axial versetzt ist und der Fixierbereich bevorzugt radial gegenüberliegend zum Querschnitt des Frontbereichs angeordnet ist. Über die Länge des Drehwerkzeugs entsteht somit ein Bereich, in welchem sich Schneidkopf und Werkzeugschaft überschneiden und ein Bereich, in welchem lediglich der Schneidkopf ausgebildet ist. Die im Wesentlichen querliegenden Kontaktflächen liegen zwischen diesen beiden Bereichen in einem Übergangsbereich, der die größte Querschnittsfläche aufweist. Der Fixierbereich kann bis über diese Kontaktflächen hinaus in Richtung Frontbereich ausgebildet sein und einen stetigen Übergang zwischen Front- und Fixierbereich des Schneidkopfes bilden. Der Querschnitt des Schneidkopfes zwischen Front- und Fixierbereich kann sich stetig verändern bzw. verringern oder erweitern und schließlich in den radial gegenüberliegenden Frontbereich übergehen. Dieser Übergang kann ebenso eine speziell geformte Geometrie zum Abtrag der Späne ausbilden.

In einer bevorzugten Ausführungsform kann die mindestens eine Spankante um 0,5 mm bis 1,5 mm, bevorzugt 1 mm, den Radius des Werkzeugschafts übersteigen, wobei der Werkzeugschaft einen Durchmesser von 2 mm bis 7 mm, bevorzugt 3 mm bis 5 mm, insbesondere 3,6 mm aufweisen kann. Das Drehwerkzeug ist demnach speziell für Bohrungen mit einem Durchmesser kleiner 15 mm geeignet. Im Speziellen eignet sich das Ausdrehwerkzeug für den Durchmesserbereich von 5 mm bis 10 mm. Hierbei überragt die Spankante bevorzugt 1 mm den Radius des Werkzeugschafts. Mit einem derartigen Einstichwerkzeug kann hierdurch in einer Ausnehmung eines Bauteils eine radiale Vertiefung, beispielsweise einen umlaufenden radialen Vorsprung, eine Fase oder eine lokale Vertiefung in der Außenwandung der Ausnehmung eingefräst werden.

In einer bevorzugten Ausführungsform kann der Durchmesser des Einspannabschnitts zwischen 4 mm und 11 mm, insbesondere 10 mm, und / oder der Werkzeugschaft eine Länge von 20 mm bis 50 mm, insbesondere 30 mm bis 40 mm, bevorzugt 35 mm, aufweisen. Dies ermöglicht die Bearbeitung von Bohrungen mit einem sehr kleinen Durchmesser und einer im Verhältnis großen Länge.

In einer bevorzugten Ausführungsform kann ein in axialer Richtung weisender Vorsprung an der Kontaktfläche des Schneidkopfes in Richtung Werkzeugschaft ausgebildet sein, bevorzugt an einer Radialkante der Kontaktfläche ausgebildet sein, wobei der Vorsprung das axiale Ende des Werkzeugschafts zumindest bereichsweise übergreift und somit die Kontaktfläche des Werkzeugschafts übergreift. Hierbei kann die Kontaktfläche nicht nur in einer Querrichtung des Werkzeugs gekrümmt sein, sondern auch in der dazu 90° liegenden Querrichtung eine Krümmung aufweisen. Diese Krümmung kann stetig in den Vorsprung übergehen. Der Schneidkopf wird durch eine derartig zweifach gekrümmte Kontaktfläche in mindestens zwei Querrichtungen lagegesichert. Durch einen Vorsprung, der die Außenseite des Werkzeugschafts übergreift, erfolgt eine zusätzliche Positionierung des Schneidkopfes auf dem Werkzeugschaft und eine zusätzliche Lagesicherung. Der Vorsprung kann über die komplette Länge der Radialkante oder auch nur in Teilbereichen der Radialkante ausgebildet sein und unterschiedliche Längen oder Höhen aufweisen. Alternativ ist denkbar, dass der Vorsprung am Werkzeugschaft angeordnet ist, und die Kontaktfläche des Schneidkopfs übergreift.

In einer bevorzugten Ausführungsform kann die axiale Länge L1 des Schneidkopfes geringer als die axiale Länge L2 des Werkzeugschafts, insbesondere L1 ≤ 1/3 ·L2 sein. Dies ermöglicht eine optimale Reparatur- und Wartungseigenschaft eines derartigen Drehwerkzeugs, da das Verschleißteil, d. h. der Schneidkopf, das kleinste Bauteil darstellt. Hierdurch können Kosten und Material eingespart werden.

### ZEICHNUNGEN

Weitere Vorteile ergeben sich aus der vorliegenden Zeichnungen und Zeichnungsbeschreibungen. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: eine dreidimensionale Ansicht eines Ausführungsbeispiels eines erfindungsgemäßen Drehwerkzeugs;
- **Fig. 2**: einen Ausschnitt des Schneidkopfes mit Werkzeugschaft aus Fig.1 als Explosionszeichnung;
- **Fig. 3**: eine erste Seitenansicht einer Ausführung eines erfindungsgemäßen Drehwerkzeugs nach Fig. 1;
- **Fig. 4**: eine zweite Seitenansicht einer Ausführung eines erfindungsgemäßen Drehwerkzeugs nach Fig. 1;
- **Fig. 5**: einen Ausschnitt einer Ausführungsform des Endbereichs eines erfindungsgemäßen Werkzeugschafts mit Zapfen und Durchgangsbohrung sowie V-Nut in drei Ansichten;
- **Fig. 6**: einen Ausschnitt einer Ausführungsform des Endbereichs eines erfindungsgemäßen Werkzeugschafts mit Zapfen und Durchgangsbohrung sowie elliptischer Nut in drei Ansichten;
- **Fig. 7**: einen Ausschnitt einer Ausführungsform des Endbereichs eines erfindungsgemäßen Werkzeugschafts mit Zapfen und Durchgangsbohrung sowie einer teilelliptische Nut als Unteransicht;
- **Fig. 8**: einen Ausschnitt einer Ausführungsform des Endbereichs eines erfindungsgemäßen Werkzeugschafts mit Zapfen und Durchgangsbohrung sowie einer teilweisen V-Nut als Unteransicht;
- **Fig. 9**: einen Ausschnitt einer Ausführungsform des Endbereichs eines erfindungsgemäßen Werkzeugschafts mit Zapfen und Durchgangsbohrung sowie einer teilelliptische Nut als Unteransicht;
- **Fig. 10**: einen Ausschnitt einer Ausführungsform des Endbereichs eines erfindungsgemäßen Werkzeugschafts mit Zapfen und Durchgangsbohrung sowie einer treppenartig abgestuften Nut als Unteransicht;
- **Fig. 11**: eine Ausführungsform eines erfindungsgemäßen Schneidkopfes mit Durchgangsbohrung und V-Nut in drei Ansichten;
- **Fig. 12**: eine weitere Ausführungsform eines erfindungsgemäßen Schneidkopfes mit Durchgangsbohrung und V-Nut in drei Ansichten;
- **Fig. 13**: eine Ausführungsform eines erfindungsgemäßen Schneidkopfes mit Durchgangsbohrung und V-Nut mit Vorsprung in drei Ansichten;
- **Fig. 14**: schematische Darstellung des Versatzes zwischen den Mittelpunkten S1 der Durchgangsbohrung eines Schneidkopfes und S2 eines Zapfens des Werkzeugschaft einer Ausführungsform der Erfindung;
- **Fig. 15**: eine Vorderansicht in Richtung Rotationsachse einer Ausführung eines erfindungsgemäßen Drehwerkzeugs.

In den Figuren sind gleiche oder gleichartige Komponenten mit gleichen Bezugszeichen beziffert.

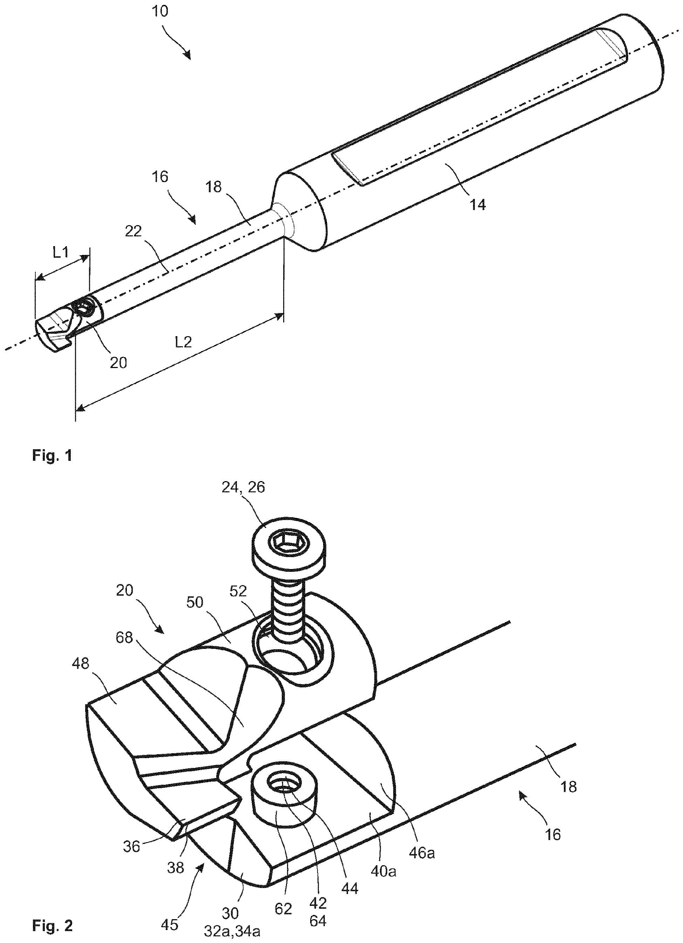

Fig. 1 zeigt eine dreidimensionale Ansicht eines Ausführungsbeispiels eines erfindungsgemäßen Drehwerkzeugs 10. Das Drehwerkzeug 10 weist einen Einspannabschnitt 14 sowie einen Werkzeugkopf 16 auf. Der Werkzeugkopf 16 wird aus dem Werkzeugschaft 18 sowie dem Schneidkopf 20 gebildet. Der Werkzeugschaft 18 hat die Länge L2, der Schneidkopf 20 die Länge L1, wobei sich die beiden Abschnitte der Längen L1 und L2 überlappen. Das Drehwerkzeug 10 kann um die Rotationsachse 22 rotieren. Der Werkzeugschaft 18 weist einen geringeren Durchmesser als der Einspannabschnitt 14 auf.

In Fig. 2 ist ein Ausschnitt des Schneidkopfes 20 mit Werkzeugschaft 18 aus Fig. 1 als Explosionszeichnung dargestellt. Fig. 1 umfasst die drei Bestandteile Werkzeugschaft 18, Schneidkopf 20 und Befestigungsmittel 24. Das Befestigungsmittel 24 wird in dieser Ausführungsform als Inbusschraube 26 ausgeführt. Der Werkzeugschaft 18 umfasst am axialen Ende 45 des Werkzeugschafts 18 eine Ausrichtungsfläche 30. Die Ausrichtungsfläche 30 bildet die querliegende Kontaktfläche 32a des Werkzeugschafts 18. Im montierten Zustand bildet das axiale Ende 45 ebenso die Pressfläche 34a des Werkzeugschafts 18 mit dem Schneidkopf 20. Der Werkzeugschaft 18 bildet zudem einen radial ausgerichteten Zapfen 62 aus, der in der dargestellten Ausführungsform eine Ausnehmung 42 in Form einer Durchgangsbohrung 64 aufweist. Die Durchgangsbohrung 64 weist ein Innengewinde 44 auf. Der Zapfen 62 befindet sich auf der Längs-Kontaktfläche 40a des Werkzeugschafts 18. Zudem weist der Werkzeugschaft 18 die endseitige Kontaktfläche 46a auf, welche ebenso eine Grenzfläche mit dem Schneidkopf 20 darstellt. Somit bilden die quer zur Achse verlaufende Kontaktflächen 46a und 34a sowie die in Achsrichtung liegende Kontaktfläche 40a einen treppenartigen Sitz des Schneidkopfs 20. Der Schneidkopf 20 umfasst die zwei Bereiche Frontbereich 48 und Fixierbereich 50. Der Frontbereich 48 bildet einen Spanbereich 36 mit einer Spankante 38. Zwischen Frontbereich 48 und Fixierbereich 50 befindet sich die querliegende Kontaktfläche 32b des Schneidkopfes 20 (in dieser Ansicht nicht sichtbar). Der Fixierbereich 50 weist eine Durchgangsbohrung 52 auf, in welche das Befestigungsmittel 24 eingebracht werden kann. Der Werkzeugkopf des Befestigungsmittels 24 steht im eingebauten Zustand nicht über den Fixierbereich 52 über, wobei der Fixierbereich ebenso eine Vertiefung in diesem Bereich besitzt. Der Schraubenkopf der radial ausgerichteten Schraube 26 wird demnach vollkommen im Fixierbereich 52 versenkt. Fixierbereich 50 und Frontbereich 48 weisen jeweils einen teilkreisförmigen Querschnitt auf, die radial gegenüberliegend angeordnet sind. Der Fixierbereich 50 ist bis über diese Kontaktflächen 32a, 32b hinaus in Richtung Frontbereich 48 ausgebildet und bildet einen stetigen Übergang zwischen Front- 48 und Fixierbereich 50 des Schneidkopfes 20. Der Querschnitt des Schneidkopfes 20 zwischen Front- 48 und Fixierbereich 50 verringert sich stetig und geht schließlich in den radial gegenüberliegenden Frontbereich 48 über. Dieser Übergang dient zum Abtrag und Beförderung der Späne bei Betrieb des Drehwerkzeugs 10 und weist entsprechend schrägverlaufende Spanförderfläche 68 auf.

Sitzt der Schneidkopf 20 mit seiner Kontaktfläche 32b auf der axial endseitigen Kontaktfläche 32a des Werkzeugschafts 18 auf, so sind die Mittelachsen des Innengewindes 44 und der Durchgangsbohrung 52 in Längsrichtung der Drehachse 22 zueinander derart versetzt, so dass ein Verschrauben der Befestigungsschraube 26 eine Presskraft zwischen Kontaktfläche 32a des Werkzeugschafts 18 und Kontaktfläche 32b des Schneidkopfs 20 bewirkt, so dass eine exakte axiale und radiale Ausrichtung erfolgt, und Spanbearbeitungskräfte über die formkomplementär aneinander gepressten Kontaktflächen 32a, 32b abgeleitet werden. Spanbearbeitungskräfte werden somit nur in geringem Maße über die Befestigungsschraube 26 geleitet, diese dient lediglich zur axialen Verpressung und radialen Fixierung des Schneidkopfs 20 auf dem Werkzeugschaft 18.

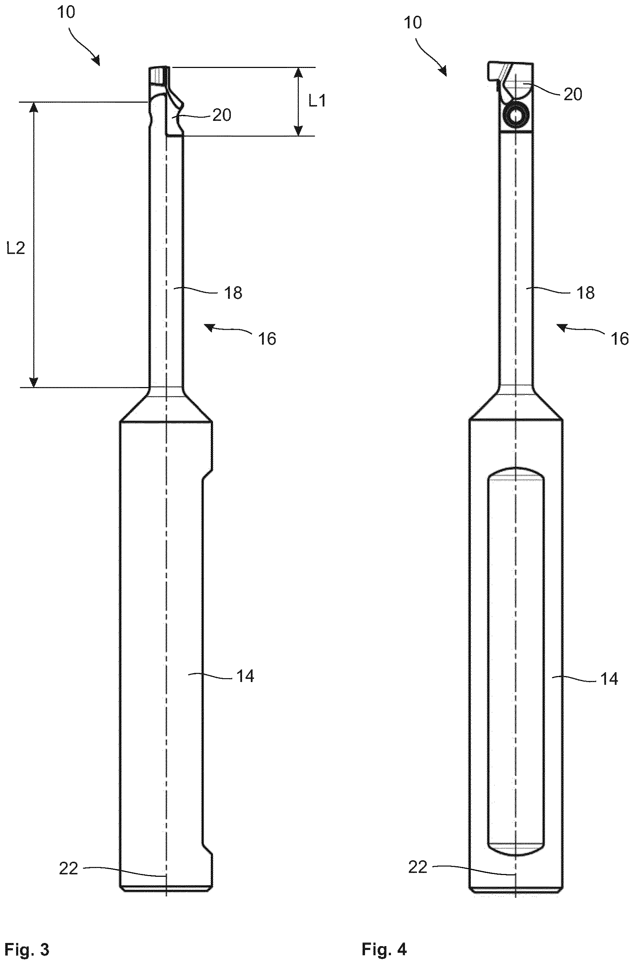

Fig. 3 sowie Fig. 4 zeigen zwei Seitenansichten der Ausführungsform nach Fig. 1 eines erfindungsgemäßen Drehwerkzeugs 10. Die Seitenansicht in Fig. 3 zeigt die charakteristische Gestalt des Schneidkopfes 20 mit den beiden Teilbereich Fixierbereich 50 und Frontbereich 48, die jeweils radial gegenüberliegend angeordnet sind. Die Länge L1 wird durch den Frontbereich 48 sowie den Fixierbereich 50 gebildet. In Fig. 4 ist erkennbar, dass die Spankante 48 über den Durchmesser des Werkzeugschafts 18 übersteht. Zudem ist ersichtlich, dass das Befestigungsmittel 24 zentrisch auf der Rotationsachse 22 angeordnet ist.

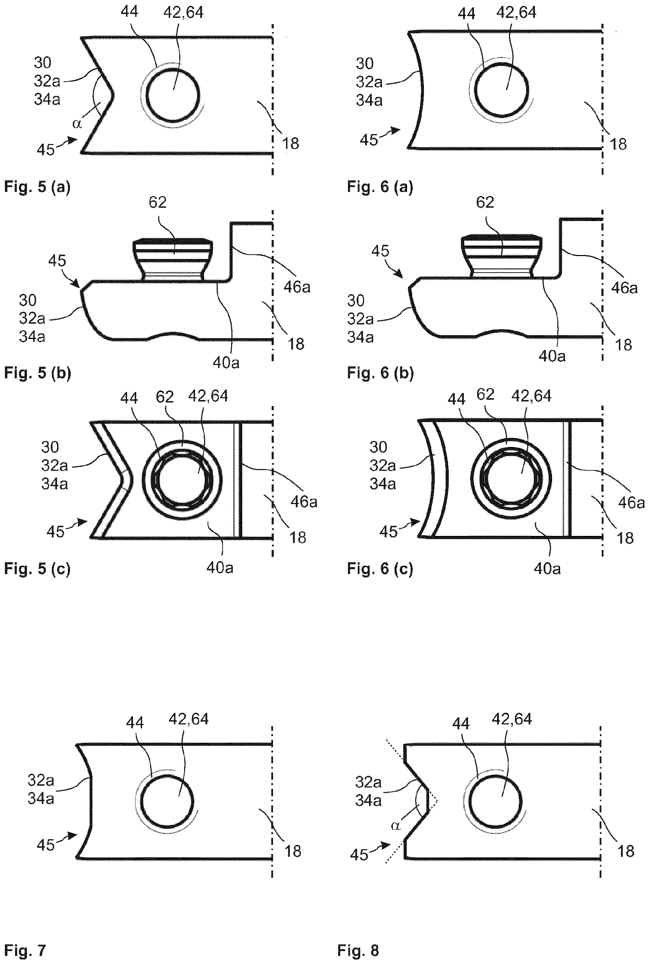

Die Figs. 5a, 5b und 5c zeigen einen Ausschnitt des Werkzeugschafts 18 mit Zapfen 62 und V-Nut 60 in drei verschiedenen Ansichten. Fig. 5a stellt die Unteransicht dieses Ausschnitts dar. Fig. 5b zeigt eine Seitenansicht und Fig. 5c eine Draufsicht. Der Ausschnitt zeigt das axiale Ende 45 des Werkzeugschafts 18. Der Werkzeugschaft 18 weist einen einstückig angeformten Zapfen 62 mit einer Ausnehmung 42 in Form einer Durchgangsbohrung 64 auf. Die Durchgangsbohrung 64 weist ein Innengewinde 44 auf. Das axiale Ende 45 des Werkzeugschafts 18 wird durch die Ausrichtungsfläche 30 in Form einer zur Drehachse des Werkzeugs querliegenden Kontaktfläche 32a gebildet. Diese querliegende Kontaktfläche 32a dient als Pressfläche 34a bei Montage des Schneidkopfes 20 am Werkzeugschaft 18. Diese Kontaktfläche 32a ist als V-Nut 60, mit einen Öffnungswinkel a ausgebildet. Die tiefste Stelle der Nut 60 liegt auf der Rotationsachse 22. Der Werkzeugschaft 18 weist zudem die Längskontaktfläche 40a sowie die endseitige Kontaktfläche 46a des Werkzeugschafts 18 mit dem Schneidkopf 20 (nicht dargestellt) auf. Vergleichbar zu den Figs. 5a, 5b und 5c zeigen die Figs. 6a, 6b und 6c ebenso einen Ausschnitt des Werkzeugschafts 18 mit Zapfen 62. Die querliegende Kontaktfläche 32a bildet in dieser Ausführungsform einen elliptischen Querschnitt aus. Die weiteren Ausführungen entsprechen denen aus Fig. 5.

Fig. 7, Fig. 8, Fig. 9 sowie Fig. 10 zeigen weitere Ausführungsformen bzw. Geometrien der querliegenden Kontaktfläche 32a eines Werkzeugschafts 18 mit Zapfen 62 und Durchgangsbohrung 64.

In Fig. 7 weist das axiale Ende 45 eine querliegende Kontaktfläche 32a mit drei Teilbereichen auf. Zwei dieser Teilbereiche sind elliptisch ausgebildet, der mittlere Teilbereich linear.

In Fig. 8 bildet die querliegende Kontaktfläche 32a einen trapezförmigen Querschnitt aus, wobei die Trapezform einen Winkel α ausbildet.

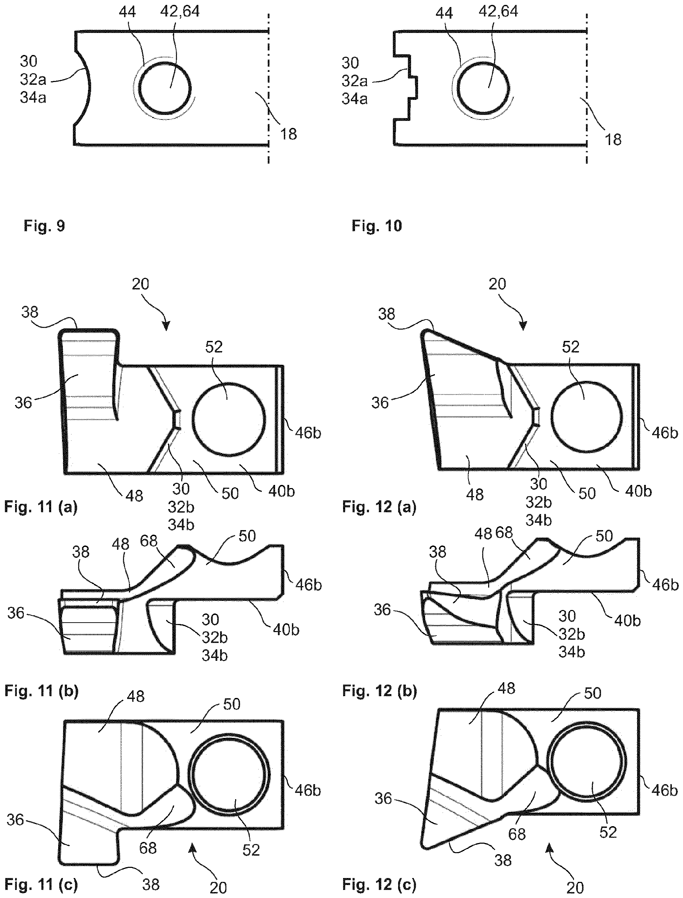

In Fig. 9 ist die querliegende Kontaktfläche 32a teilelliptisch ausgebildet, wobei die Außenbereiche geradlinig verbleiben.

Einen treppenartig abgestuften Querschnitt der querliegenden Kontaktfläche 32a zeigt Fig. 10.

Alle diese Querschnittsformen aus Fig. 7 bis Fig. 10 sind symmetrisch zur Rotationsachse 22 ausgebildet. Ebenso ist jedoch eine asymmetrische Ausbildung dieser querliegenden Kontaktfläche 32a denkbar. Die Krümmung der querliegenden Kontaktfläche 32a kann ebenso in einer Richtung 90° zu der dargestellten Ansicht ausgebildet sein, so dass eine doppelt gekrümmte Kontaktfläche 32a entsteht. Diese kann somit rinnenförmig gekrümmt ausgeformt sein, und einen formkomplementären Sitz in zwei zueinander orthogonalen radialen Richtungen zur Drehachse des Werkzeugs ausbilden.

Die Figs. 11 und 12 zeigen verschiedene Ausführungsformen des Schneidkopfes 20 mit Durchgangsbohrung 52 und einer querliegenden Kontaktfläche 32b in Form einer V-Nut 60.

Fig. 11a zeigt eine Unteransicht des Schneidkopfes 20. Der Schneidkopf 20 umfasst einen Frontbereich 48 sowie einen Fixierbereich 50. Der Frontbereich 48 umfasst zudem den Spanbereich 36 sowie die Spankante 38. In der dargestellten Ausführungsform ist die Spankante 38 parallel zur Rotationsachse 22 ausgeführt. Zwischen Fixierbereich 50 und Frontbereich 48 befindet sich die Ausrichtungsfläche 30 in Form einer querliegenden Kontaktfläche 32a. Diese querliegende Kontaktfläche 32a dient im eingebauten Zustand als Pressfläche 34a. Der Fixierbereich 50 umfasst eine Durchgangsbohrung 52.

In Fig. 11b ist erkennbar, dass die beiden Teilbereiche Frontbereich 48 sowie Fixierbereich 50 radial gegenüberliegend angeordnet sind. Beide Teilbereiche weisen hierbei einen teilkreisförmigen Querschnitt auf. Zwischen Fixierbereich 50 und Frontbereich 48 befindet sich die Ausrichtungsfläche 30 in Form der querliegenden Kontaktfläche 32b sowie auf der gegenüberliegenden Seite zumindest eine Spanführungsfläche 68 zur Abführung von Spänen bei Betrieb des Drehwerkzeugs 10. Im eingebauten Zustand ist der Schneidkopf 20 durch die Ausrichtungsfläche 30, die Längskontaktfläche 40b sowie die endseitige Kontaktfläche 46b mit dem Werkzeugschaft 18 in Kontakt.

Fig. 11c zeigt eine Draufsicht des Schneidkopfes 20 aus Fig. 11a und Fig. 11b.

In den Figs. 12a, 12b und 12c ist ebenso ein Schneidkopf 20 abgebildet, welcher jedoch Unterschiede in der Ausbildung der Spankante 38 zu der Ausführungsform aus den Fig. 11a, 11b und 11c aufweist. Die Spankante 38 ist nicht parallel zur Rotationsachse 22 angeordnet. Die Spankante 38 verläuft unter einem Winkel zur Rotationsachse 22 für die Ausformung eines durch die Form der Spankante definierten Freistichs und besitzt einen größeren Querschnitt als die Spankante 38 aus Fig. 11. In den weiteren Ausführungen entsprechen die Darstellungen aus Fig. 12 denen aus Fig. 11.

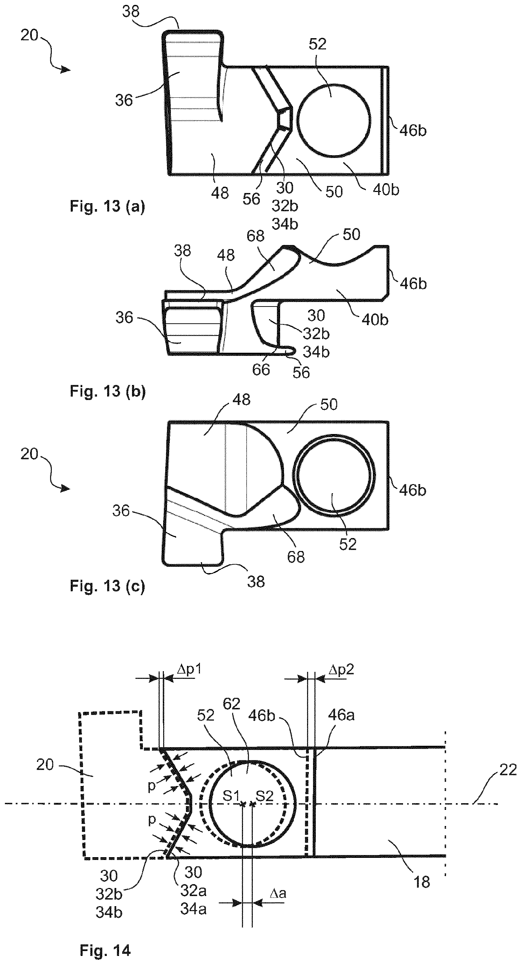

In Fig. 13 ist eine Ausführungsform des Schneidkopfes 20 mit Durchgangsbohrung 52, einer V-Nut 60 sowie einem Vorsprung 56 dargestellt. Fig. 13a zeigt eine Unteransicht, Fig. 13b eine Seitenansicht und Fig. 13c eine Draufsicht des Schneidkopfes 20. Der Schneidkopf 20 umfasst ebenso die Teilbereiche Frontbereich 48 und Fixierbereich 50. Im Unterschied zu den Ausführungen aus Fig. 11 und Fig. 12 weist der Schneidkopf 20 einen Vorsprung 56 an der Kontaktfläche 32b des Schneidkopfes 20 auf. Der Vorsprung 56 ist in Richtung des Werkzeugschafts 18 ausgebildet. Der Vorsprung 56 ist an einer Radialkante 66 der Kontaktfläche 32b angebracht und übergreift im eingebauten Zustand das axiale Ende 56 des Werkzeugschafts 18 bereichsweise. Der Vorsprung 56 ist in dieser Ausführungsform über die komplette Radialkante 66 der Kontaktfläche 32b ausgebildet. Eine Spanführungsfläche 68 dient der Abführung von Spänen aus dem Frontbereich 48 zum Fixierbereich 50.

Fig. 14 zeigt eine schematische Darstellung des Versatzes zwischen den Mittelpunkten S1 der Durchgangsbohrung 52 des Schneidkopfes 20 und S2 des Zapfens 62 des Werkzeugschafts 18. Die schematische Darstellung zeigt den Montageschritt vor Einbringung des Befestigungsmittels 24. Der Schneidkopf 20 und der Werkzeugschaft 18 stehen bereits in Kontakt, wobei der Zapfen 62 in die Durchgangsbohrung 52 des Schneidkopfes 20 eingreift. Die Ausrichtungsfläche 30 in Form der querliegenden Kontaktflächen 32a und 32b stehen bereits in Kontakt bzw. bilden einen minimalen Spalt Δp1. Zwischen den Kontaktflächen 32a und 32b besteht in diesem Montagezustand noch kein Pressdruck. Die endseitigen Kontaktflächen 46a und 46b bilden einen Spalt Δp2 aus, wobei der Spalt Δp2 größer als der Spalt Δp1 ist. In diesem Zustand liegen die Mittelpunkte S1 und S2 nicht aufeinander, sondern in einem Abstand Δa, wobei beide Mittelpunkte S1 und S2 die Rotationsachse 22 schneiden. Bei Montage des Befestigungsmittels 24 (nicht dargestellt) wird der Schneidkopf 20 in Richtung Werkzeugschaft 18 verschoben und die querliegenden Kontaktflächen 32a und 32b aneinandergepresst. Diese bilden die Pressflächen 34a und 34b aus.

Durch diesen Pressdruck p wird der Schneidkopf am Werkzeugschaft 18 zusätzlich fixiert. Das heißt, dass bei Montage des Befestigungsmittels 24 (nicht dargestellt) der Mittelpunkt S1 in Richtung Mittelpunkt S2 verschoben wird, wodurch der Pressdruck p auf den Ausrichtungsflächen 30 entsteht. Bei vollständiger Montage des Befestigungsmittels 24 verringert bzw. schließt sich ebenso der Spalt Δp2, wobei zwischen den endseitigen Kontaktflächen 46a und 46b kein Pressdruck entstehen muss.

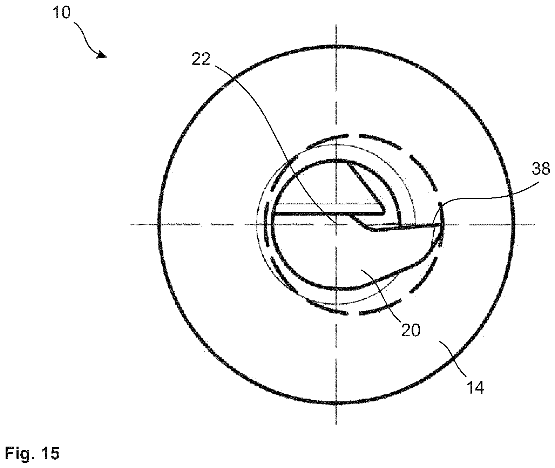

Fig. 15 zeigt eine Vorderansicht in Richtung Rotationsachse 22 einer Ausführungsform eines erfindungsgemäßen Drehwerkzeugs 10. Die Spankante 38 steht über den Durchmesser des Werkzeugschafts 18 über. Ebenso ist ersichtlich, dass der Einspannabschnitt 14 einen größeren Durchmesser als der Werkzeugschaft 18 mit Schneidkopf 20 aufweist.

### BEZUGSZEICHENLISTE

- 10: Drehwerkzeug
- 14: Einspannabschnitt
- 16: Werkzeugkopf
- 18: Werkzeugschaft
- 20: Schneidkopf
- 22: Rotationsachse
- 24: Befestigungsmittel
- 26: Schraube
- 28: Gewindebolzen
- 30: Ausrichtungsfläche
- 32a: querliegende Kontaktfläche des Werkzeugschafts
- 32b: querliegende Kontaktfläche des Schneidkopfes
- 34a: Pressfläche des Werkzeugschafts
- 34b: Pressfläche des Schneidkopfes
- 36: Spanbereich
- 38: Spankante
- 40a: Längs-Kontaktfläche des Werkzeugschafts
- 40b: Längs-Kontaktfläche des Schneidkopfes
- 42: Ausnehmung
- 44: Innengewinde des Zapfens
- 45: axiales Ende des Werkzeugschafts
- 46a: endseitige Kontaktfläche des Werkzeugschafts
- 46b: endseitige Kontaktfläche des Schneidkopfes
- 48: Frontbereich des Schneidkopfes
- 50: Fixierbereich des Schneidkopfes
- 52: Durchgangsbohrung des Schneidkopfes
- 54: Innengewinde der Durchgangsbohrung
- 56: Vorsprung
- 58: Nut
- 60: V-Nut
- 62: Zapfen
- 64: Durchgangsbohrung des Zapfens
- 66: Radialkante der Kontaktfläche
- 68: Spanführungsfläche

## Patentansprüche

1. Drehwerkzeug (10) für eine spanende Bearbeitung von Werkstücken, insbesondere Ausdreh- oder Einstichwerkzeug zur Bearbeitung von Bohrungen mit einem Durchmesser d ≤ 15 mm, umfassend einen Einspannabschnitt (14) und einen Werkzeugkopf (16), der einen Werkzeugschaft (18) und einen ablösbaren Schneidkopf (20) mit mindestens einer Spankante (38) umfasst, wobei der Schneidkopf (20) an einem einstückig am Werkzeugschaft (18) und radial ausgerichteten Zapfen (62) und / oder durch ein radial ausgerichtetes, lösbares Befestigungsmittel (24) am Werkzeugschaft (18) befestigbar, bevorzugt einsteckbar, ist, und der Schneidkopf (20) über zur Rotationsachse (22) des Werkzeugs (10) im Wesentlichen querliegende, gekrümmte, abgewinkelte oder gebogene, und formkomplementären Kontaktflächen (32a, 32b) des Werkzeugschafts (18) und des Schneidkopfs (20) in Form von Ausrichtungsflächen (30) zwischen Schneidkopf (20) und Werkzeugschaft (18) in Längs- und Querrichtung zur Rotationsachse (22) ausrichtend fixierbar ist, sodass der Schneidkopf auf der Rotationsachse in radialer Achse zentriert wird, wobei die Kontaktfläche (32a) am axialen Ende (45) des Werkzeugschafts (18) definiert ist und der Zapfen (62) und/oder das Befestigungsmittel (24) in Richtung Einspannabschnitt (14) rückversetzt ist, so dass eine Befestigung des Schneidkopfs (20) am Zapfen (62) und/oder durch das Befestigungsmittel (24) ein axiales Verpressen der Kontaktflächen (32a, 32b) bewirkt.

2. Drehwerkzeug (10) nach Anspruch 1, **dadurch gekennzeichnet, dass** der Schneidkopf (20) einen Fixierbereich (50) im axialen Längsabschnitt des Werkzeugschafts (18) und einen, die mindestens eine Spankante (38) tragenden Frontbereich (48) aufweist, wobei der Frontbereich (48) des Schneidkopfes (20) in Längsrichtung über das axiale Ende (45) des Werkzeugschafts (18) übersteht.

3. Drehwerkzeug (10) nach Anspruch 1 und 2, **dadurch gekennzeichnet, dass** die im Wesentlichen querliegende Kontaktfläche (32a) des Werkzeugschafts (18) konkav ausgebildet ist und der Frontbereich (48) eine hierzu korrespondierende konvexe Kontaktfläche (32b) aufweist, wobei die Kontaktfläche (32a) des Werkzeugschafts (18) zumindest teilweise eine Vertiefung, insbesondere eine Nut (58) aufweist, welche die Form einer V-Nut (60), teilweisen V-Nut, elliptischen Nut und / oder treppenartig abgestuften Nut, teilweise treppenartig abgestuften Nut und / oder teilelliptischen Nut aufweist, und die korrespondierende Kontaktfläche (32b) des Schneidkopfes (20) als inverse Form der Kontaktfläche (32a) des Werkzeugschafts (18) ausgebildet ist.

4. Drehwerkzeug (10) nach Anspruch 3, **dadurch gekennzeichnet, dass** die Vertiefung als Nut (58) ausgewinkelt ist, wobei die Nut (58) einen Öffnungswinkel 90° ≤ α ≤ 160°, bevorzugt 100° ≤ α ≤ 140°, ganz besonders bevorzugt zwischen 105° ≤ α ≤ 125° aufweist.

5. Drehwerkzeug (10) nach einem der vorgenannten Ansprüche, **dadurch gekennzeichnet, dass** das Befestigungsmittel (24) in eine Durchgangsbohrung (52) im Schneidkopf (20) in radialer Richtung zur Rotationsachse (22) des Drehwerkzeugs (10) eingreift, bevorzugt formschlüssig in diese Durchgangsbohrung (52) eingreift.

6. Drehwerkzeug (10) nach einem der vorgenannten Ansprüche, **dadurch gekennzeichnet, dass** der Zapfen (62) am Werkzeugschaft (18) eine Ausnehmung (42), insbesondere eine Durchgangsbohrung (64) aufweist.

7. Drehwerkzeug (10) nach Anspruch 6, **dadurch gekennzeichnet, dass** die Ausnehmung (42) ein Innengewinde (44) aufweist und das Befestigungsmittel (24) in Form einer Schraube (26) oder eines Gewindebolzens (28) darin eingreift und somit den Schneidkopf (20) mit dem Werkzeugschaft (18) formschlüssig verbindet.

8. Drehwerkzeug (10) nach Anspruch 5, **dadurch gekennzeichnet, dass** der Mittelpunkt S1 der Durchgangsbohrung (52) des Schneidkopfes (20) und der Mittelpunkt S2 des Zapfens (62) des Werkzeugschafts (18) beim flächigen Kontakt der Kontaktflächen (32a, 32b) längsaxial versetzt angeordnet sind.

9. Drehwerkzeug (10) nach einem der vorgenannten Ansprüche, **dadurch gekennzeichnet, dass** das Befestigungsmittel (24) nicht über den Schneidradius der Spankante (38) des Schneidkopfes (20) übersteht.

10. Drehwerkzeug (10) nach einem der vorgenannten Ansprüche, **dadurch gekennzeichnet, dass** ein Frontbereich (48) des Schneidkopfes (20) einen im Wesentlichen teilkreisförmigen, insbesondere halbkreisförmigen Querschnitt aufweist und durch die Kontaktfläche (32b) begrenzt ist, wobei die mindestens eine Spankante (38) radial über den Querschnitt im Frontbereich (48) und / oder in Längsrichtung über den Schneidkopf (20) übersteht.

11. Drehwerkzeug (10) nach einem der vorgenannten Ansprüche, **dadurch gekennzeichnet, dass** ein Fixierbereich (50) des Schneidkopf (20), in welchem der Schneidkopf (20) an den Werkzeugschaft (18) montiert wird, einen im Wesentlichen teilkreisförmigen, insbesondere halbkreisförmigen Querschnitt aufweist, wobei der Fixierbereich (50) zu einem Frontbereich (48) des Schneidkopfes (20) axial versetzt ist und der Fixierbereich (50) bevorzugt radial gegenüberliegend zum Querschnitt des Frontbereichs (48) angeordnet ist.

12. Drehwerkzeug (10) nach einem der vorgenannten Ansprüche, **dadurch gekennzeichnet, dass** die mindestens eine Spankante (38) um 0,5 mm bis 1,5 mm, bevorzugt 1 mm, den Radius des Werkzeugschafts (18) übersteigt, wobei der Werkzeugschaft (18) einen Durchmesser von 2 mm bis 7 mm, bevorzugt 3 mm bis 5 mm, insbesondere 3,6 mm aufweist.

13. Drehwerkzeug (10) nach einem der vorgenannten Ansprüche, **dadurch gekennzeichnet, dass** der Durchmesser des Einspannabschnitts (14) zwischen 4 mm und 11 mm, insbesondere 10 mm und / oder der Werkzeugschaft (18) eine Länge von 20 mm bis 50 mm, insbesondere 30 mm bis 40 mm, bevorzugt 35 mm aufweist.

14. Drehwerkzeug (10) nach einem der vorgenannten Ansprüche, **dadurch gekennzeichnet, dass** ein Vorsprung (56) an der Kontaktfläche (32b) des Schneidkopfes (20) in Richtung Werkzeugschaft (18) ausgebildet ist, bevorzugt an einer Radialkante (66) der Kontaktfläche (32b) ausgebildet ist, wobei der Vorsprung (56) das axiale Ende (45) des Werkzeugschafts (18) zumindest bereichsweise übergreift.

15. Drehwerkzeug (10) nach einem der vorgenannten Ansprüche, **dadurch gekennzeichnet, dass** die axiale Länge L1 des Schneidkopfes (20) geringer ist als die axiale Länge L2 des Werkzeugschafts (20), insbesondere L1 ≤ 1/3 · L2.

## Claims

1. Turning tool (10) for machining of workpieces, in particular a boring or recessing tool for machining of holes with a diameter d of ≤ 15 mm, comprising a clamping section (14) and a tool head (16) which comprises a tool shank (18) and a detachable cutting head (20) with at least one cutting edge (38), **wherein** the cutting head (20) is fastenable to the tool shank (18), preferably insertable, on a journal (62) radially aligned and in one piece with the tool shank (18) and / or by a radially aligned and detachable fastening means (24), and the cutting head (20) is fixable in aligning manner in the longitudinal and transverse directions relative to the rotation axis (22) using curved, angled or bent and shape-complementary contact surfaces (32a, 32b) of the tool shank (18) and of the cutting head (20) that are substantially transverse relative to the rotation axis (22) of the tool (10) and in the form of alignment surfaces (30) between cutting head (20) and tool shank (18), such that the cutting head is centered on the rotation axis in the radial axis, the contact surface (32a) at the axial end (45) of the tool shank (18) being defined and the journal (62) and/or the fastening means (24) being set back in the direction of the clamping section (14) such that fastening of the cutting head (20) to the journal (62) and/or by the fastening means (24) effects an axial pressing together of the contact surfaces (32a, 32b).

2. Turning tool (10) according to claim 1, **characterized in that** the cutting head (20) has a fixing area (50) in the axial longitudinal section of the tool shank (18) and a front area (48) carrying the at least one cutting edge (38), said front area (48) of the cutting head (20) projecting beyond the axial end (45) of the tool shank (18) in the longitudinal direction.

3. Turning tool (10) according to claim 1 and 2, **characterized in that** the substantially transverse contact surface (32a) of the tool shank (18) is designed concave and the front area (48) has a convex contact surface (32b) corresponding thereto, said contact surface (32a) of the tool shank (18) having at least partially a depression, in particular a groove (58) which has the form of a V-groove (60), a partial V-groove, an elliptical groove and / or a stepped groove, a partial stepped groove and / or a partially elliptical groove, and the corresponding contact surface (32b) of the cutting head (20) is designed as the inverse form of the contact surface (32a) of the tool shank (18).

4. Turning tool (10) according to claim 3, **characterized in that** the depression is angled as a groove (58), said groove (58) having an opening angle of 90° ≤ α ≤ 160°, preferably 100° ≤ α ≤ 140°, and particularly preferably between 105° ≤ α ≤ 125°.

5. Turning tool (10) according to one of the above claims, **characterized in that** the fastening means (24) engages in a through-hole (52) in the cutting head (20) in the radial direction relative to the rotation axis (22) of the turning tool (10), and preferably engages positively in said through-hole (52).

6. Turning tool (10) according to one of the above claims, **characterized in that** the journal (62) on the tool shank (18) has a recess (42), in particular a through-hole (64).

7. Turning tool (10) according to claim 6, **characterized in that** the recess (42) has a female thread (44) and the fastening means (24) in the form of a screw (26) or a threaded bolt (28) engages therein and so positively connects the cutting head (20) to the tool shank (18).

8. Turning tool (10) according to claim 5, **characterized in that** the centerpoint S1 of the through-hole (52) of the cutting head (20) and the centerpoint S2 of the journal (62) of the tool shank (18) are arranged longitudinally axially offset to one another during flat contact of the contact surfaces (32a, 32b).

9. Turning tool (10) according to one of the above claims, **characterized in that** the fastening means (24) does not project beyond the cutting radius of the cutting edge (38) of the cutting head (20).

10. Turning tool (10) according to one of the above claims, **characterized in that** a front area (48) of the cutting head (20) has a substantially part-circular, in particular semicircular cross-section and is limited by the contact surface (32b), the at least one cutting edge (38) projecting radially beyond the cross-section in the front area (48) and / or beyond the cutting head (20) in the longitudinal direction.

11. Turning tool (10) according to one of the above claims, **characterized in that** a fixing area (50) of the cutting head (20) in which said cutting head (20) is fitted to the tool shank (18) has a substantially part-circular, in particular semicircular cross-section, said fixing area (50) being axially offset relative to a front area (48) of the cutting head (20) and said fixing area (50) being arranged preferably radially opposite to the cross-section of the front area (48).

12. Turning tool (10) according to one of the above claims, **characterized in that** the at least one cutting edge (38) exceeds the radius of the tool shank (18) by 0.5 mm to 1.5 mm, preferably 1 mm, the tool shank (18) having a diameter of 2 mm to 7 mm, preferably 3 mm to 5 mm, in particular 3.6 mm.

13. Turning tool (10) according to one of the above claims, **characterized in that** the diameter of the clamping section (14) is between 4 mm and 11 mm, in particular 10 mm and / or the tool shank (18) has a length of 20 mm to 50 mm, in particular 30 mm to 40 mm, preferably 35 mm.

14. Turning tool (10) according to one of the above claims, **characterized in that** a projection (56) is provided on the contact surface (32b) of the cutting head (20) in the direction of the tool shank (18), preferably on a radial edge (66) of the contact surface (32b), said projection (56) gripping around the axial end (45) of the tool shank (18) at least in some areas.

15. Turning tool (10) according to one of the above claims, **characterized in that** the axial length L1 of the cutting head (20) is less than the axial length L2 of the tool shank (20), in particular L1 ≤ 1/3 · L2.

## Revendications

1. Outil de tournage (10) pour un usinage par enlèvement de copeaux de pièces d'œuvre, notamment outil à aléser ou à saigner pour l'usinage d'alésages avec un diamètre d ≤ 15 mm, comprenant une section de fixation (14) et une tête d'outil (16) qui comprend une tige d'outil (18) et une tête de coupe amovible (20) avec au moins une arête d'usinage (38), sachant que la tête de coupe (20) est fixable sur la tige d'outil (18), de préférence emmanchable, sur un cône (62) constitué d'un seul tenant sur la tige d'outil (18) et orienté radialement, et/ou par un moyen de fixation (24) amovible, orienté radialement et que la tête de coupe (20) est fixable de manière alignante dans le sens longitudinal et transversal en direction de l'axe de rotation (22) par le biais de surfaces de contact (32a, 32b) de la tige d'outil (18) et de la tête de coupe (20) positionnées essentiellement transversalement par rapport à l'axe de rotation (22) de l'outil, courbées et à complémentarité de forme, se présentant sous la forme de surfaces d'alignement (30) entre la tête de coupe (20) et la tige d'outil (18) de façon que la tête de coupe est centrée sur l'axe de rotation dans l'axe radial, sachant que la surface de contact (32a) est définie sur l'extrémité axiale (45) de la tige d'outil (18) et que le cône (62) et/ou le moyen de fixation (24) est en retrait en direction de la section de fixation (14) si bien qu'une fixation de la tête de coupe (20) sur le cône (62) et/ou par le moyen de fixation (24) provoque une compression axiale des surfaces de contact (32a, 32b).

2. Outil de tournage (10) selon la revendication 1, **caractérisé en ce que** la tête de coupe (20) présente une zone de fixation (50) dans la section longitudinale axiale de la tige d'outil (18) et une zone frontale (48) portant ladite au moins une arête d'usinage (38), sachant que la zone frontale (48) de la tête de coupe (20) dépasse de l'extrémité axiale (45) de la tige d'outil (18) dans le sens longitudinal.

3. Outil de tournage (10) selon la revendication 1 et 2, **caractérisé en ce que** la surface de contact (32a) de la tige d'outil (18) essentiellement transversale a une forme concave et que la zone frontale (48) présente une surface de contact (32b) convexe correspondante, sachant que la surface de contact (32a) de la tige d'outil (18) présente au moins partiellement un renfoncement, notamment une rainure (58) qui présente la forme d'une rainure en V (60), d'une rainure en V partielle, d'une rainure elliptique et/ou d'une rainure échelonnée en forme d'escalier, d'une rainure partiellement échelonnée en forme d'escalier et/ou d'une rainure partiellement elliptique, et que la surface de contact correspondante (32b) de la tête de coupe (20) est conçue sous la forme inverse de la surface de contact (32a) de la tige d'outil (18).

4. Outil de tournage (10) selon la revendication 3, **caractérisé en ce que** le renfoncement est mis en équerre sous forme de rainure (58), sachant que la rainure (58) présente un angle d'ouverture 90° ≤ α ≤ 160°, de préférence 100° ≤ α ≤ 140° et particulièrement de préférence tel que 105° ≤ α ≤ 125°.

5. Outil de tournage (10) selon une des revendications précédentes, **caractérisé en ce que** le moyen de fixation (24) s'engage dans un alésage traversant (52) dans la tête de coupe (20) dans le sens radial par rapport à l'axe de rotation (22) de l'outil de tournage (10) et s'engage de préférence par complémentarité de forme dans ledit alésage traversant (52).

6. Outil de tournage (10) selon une des revendications précédentes, **caractérisé en ce que** le cône (62) sur la tige d'outil (18) présente un évidement (42), notamment un alésage traversant (64).

7. Outil de tournage (10) selon la revendication 6, **caractérisé en ce que** l'évidement (42) présente un filetage intérieur (44) et que le moyen de fixation (24) s'engage dedans sous la forme d'une vis (26) ou d'un boulon fileté (28) et qu'il relie ainsi la tête de coupe (20) à la tige d'outil (18) par complémentarité de forme.

8. Outil de tournage (10) selon la revendication 5, **caractérisé en ce que** le centre S1 de l'alésage traversant (52) de la tête de coupe (20) et le centre S2 du cône (62) de la tige d'outil (18) sont disposés décalés sur l'axe longitudinal, lors du plein contact des surfaces de contact (32a, 32b).

9. Outil de tournage (10) selon une des revendications précédentes, **caractérisé en ce que** le moyen de fixation (24) ne déborde pas sur le rayon de coupe de l'arête d'usinage (38) de la tête de coupe (20).

10. Outil de tournage (10) selon une des revendications précédentes, **caractérisé en ce qu'**une zone frontale (48) de la tête de coupe (20) présente une section essentiellement partiellement circulaire, notamment demi-circulaire et est délimitée par la surface de contact (32b), sachant que ladite au moins une arête d'usinage (38) déborde radialement de la section dans la zone frontale (48) et/ou de la tête de coupe (20) dans le sens longitudinal.

11. Outil de tournage (10) selon une des revendications précédentes, **caractérisé en ce qu'**une zone de fixation (50) de la tête de coupe (20) dans laquelle la tête de coupe (20) est montée sur la tige d'outil (18) présente une section essentiellement partiellement circulaire, notamment demi-circulaire, sachant que la zone de fixation (50) est décalée axialement par rapport à une zone frontale (48) de la tête de coupe (20) et que la zone de fixation (50) est disposée de préférence radialement sur le côté opposé à la section de la zone frontale (48).

12. Outil de tournage (10) selon une des revendications précédentes, **caractérisé en ce que** ladite au moins une arête d'usinage (38) dépasse de 0,5 mm à 1,5 mm, de préférence d'1 mm, le rayon de la tige d'outil (18), sachant que la tige d'outil (18) présente un diamètre de 2 mm à 7 mm, de préférence de 3 mm à 5 mm, notamment de 3,6 mm.

13. Outil de tournage (10) selon une des revendications précédentes, **caractérisé en ce que** le diamètre de la section de fixation (14) est compris entre 4 mm et 11 mm, de préférence 10 mm et/ou que la tige d'outil (18) présente une longueur comprise entre 20 mm et 50 mm, notamment entre 30 mm et 40 mm et est de préférence de 35 mm.

14. Outil de tournage (10) selon une des revendications précédentes, **caractérisé en ce qu'**une saillie (56) est constituée sur la surface de contact (32b) de la tête de coupe (20) en direction de la tige d'outil (18), de préférence sur une arête radiale (66) de la surface de contact (32b), sachant que la saillie (56) chevauche au moins partiellement l'extrémité axiale (45) de la tige d'outil (18).

15. Outil de tournage (10) selon une des revendications précédentes, **caractérisé en ce que** la longueur axiale L1 de la tête de coupe (20) est inférieure à la longueur axiale L2 de la tige d'outil (20), notamment L1 ≤ 1/3 · L2.
